# EUROPEAN PATENT SPECIFICATION

(11) **EP 3 104 478 B1**
(45) Date of publication and mention of the grant of the patent: **24.01.2018**
(21) Application number: 16173435.5
(22) Date of filing: 08.06.2016
(51) Int. Cl.: H02G 3/14

(54) **ELECTRIC DEVICE WITH LABEL CARRIER**
ELEKTRISCHE VORRICHTUNG MIT ETIKETTENTRÄGER
DISPOSITIF ÉLECTRIQUE AVEC SUPPORT D'ÉTIQUETTES

(30) Priority: 10.06.2015 BE 201500164
(43) Date of publication of application: 14.12.2016
(73) Proprietor: Niko NV, 9100 Sint-Niklaas (BE)
(72) Inventor: Tas, Johan Helena Alice, 9160 Sint-Niklaas (BE)
(74) Representative: D'Halleweyn, Nele Veerle Trees Gertrudis

(56) References cited:
- EP-A1- 2 393 175
- EP-A2- 2 383 852
- DE-U1- 8 807 214

## Description

### Technical field of the invention

The present invention relates to an electric device to be installed into or onto a wall. More particular, the invention relates to an electric device with a label carrier and to a label carrier for use with such an electric device.

### Background of the invention

Electric devices with label carriers mostly comprise a mounting frame, a cover frame and a label carrier. The mounting frame is designed to be fixed onto a wall and to comprise an electric function, e.g. a switch or a power socket. The electric function may then be mounted in a cavity in the wall, or, if the electric function is small, may be mounted onto the front of the mounting frame. The cover frame is designed to be fixed onto the mounting frame and is provided with a window opening. The label carrier is designed to be placed between the mounting frame and the cover frame in front of the window opening.

An example of an electric installation device with label carrier is described in EP 2 383 852. More specifically, EP 2 383 852 describes an electric installation device comprising a mounting frame onto which a label carrier is attached using spring clips.

DE 10 2013 100 909 describes another similar example of an electric installation device. The device described in DE 10 2013 100 909 similarly contains a mounting frame and a label carrier. The mounting frame is provided with retaining elements onto which sliding elements are attached. The label carrier can be attached to these sliding elements. The sliding elements are adjustable in height relative to the retaining elements.

DE 88 07 214 relates to name sign carriers for electrical installation apparatus, wherein in the cover frame at least one viewing window is inserted and that the name sign carrier is fixed on the surface of the support ring facing the cover frame between the support ring and the cover frame with adaptation to the respective shaping of the cover frame.

A disadvantage of the electric devices described above is that multiple small fastening parts are needed to attach the label carrier onto the installation frame, making the installation complex.

DE 88 07 214 relates to name sign carriers for electrical installation apparatus, wherein in the cover frame at least one viewing window is inserted and that the name sign carrier is fixed on the surface of the support ring facing the cover frame between the support ring and the cover frame with adaptation to the respective shaping of the cover frame.

EP 2 393 175 relates to a label holder having a base section for attachment to a device insert, and a retaining section for holding a laminar label plate. The retaining section is connected with the base section by a spring-elastic connecting section such that the retaining section is movable from a relaxed starting position toward the base section against a spring force. The base section changes into the retaining section over the connecting section that comprises elastically deformable spring arms, wherein the holder is designed as an integrally shaped part made of plastic.

### Summary of the invention

It is an object of embodiments of the present invention to provide an electric device with a label carrier which can easily be attached to a mounting frame of the electric device.

A further objective is to provide a way for an electric function, e.g. a power socket, a switch, a data connection, etc. to be labelled such that the label remains attached to the installation frame, and thus to the electric function, even when the cover frame is not attached to the electric device. Therefore, the present invention provides an electric device for being installed into or onto a wall, having the features of claim 1. The electric device comprises at least one electric function and at least one mounting frame for fixing the electric device onto a wall and adapted to carry the at least one electric function. The electric device furthermore comprises a cover frame adapted to be fixed onto the at least one mounting frame, the cover frame being provided with at least one window opening and at least one label carrier to be placed between the at least one mounting frame and the cover frame in front of the at least one window opening. According to the invention, each of the at least one label carrier has an elongated middle part with a first and second end, the first end having a first support member and the second end having a second support member. Further according to the invention, each of the at least one mounting frame is provided with a first cut-out for providing the first support member to the back of the mounting frame and with a second cut-out for providing the second support member to the back of the mounting frame, the first and second cut-outs being such that, when installed, the first and second support members of the label carrier are placed against the back of the mounting frame whilst the elongated middle part of the label carrier is located at the front of the mounting frame.

An electric device according to embodiments of the invention is distinguished from electric devices know in the art in that the elongated middle part of the label carrier is, when mounted, located at the front of the mounting frame and the first and second end of the label carrier are located at the back of the mounting frame.

An electric device according to embodiments of the invention has as an advantage that no additional means are required to fix the label carrier to the mounting frame. More in particular, the label carrier and the mounting frame are adapted in such a way that the label carrier can be installed in a fixed position onto the mounting frame, and stays on the mounting frame even when the cover frame is removed.

According to embodiments of the invention, the first and second cut-outs may preferably be adjacent to the outer perimeter of the mounting frame, preferably adjacent to an upper edge or a lower edge of the mounting frame. In this way, it will be very simple to fix the label carrier to the mounting frame, and the label carrier can be installed near an edge of the mounting frame.

The mounting frame is provided with a first protrusion and a second protrusion adjacent to respectively the first cut-out and the second cut-out. These first and second protrusions extend with respect to a plane of the mounting frame at the front side thereof. The first and second support members are adapted to extend behind the first and second protrusion. Even more preferably, the first and second protrusion may extend so far from the plane of the mounting frame that the first and second support member do not extend from the back side of the mounting frame. In that way, protruding parts from the back side of the mounting frame may be avoided, and the mounting frame can, when installed, at all times make contact to a flat wall along its entire periphery.

According to embodiments of the invention, the mounting frame may have a first length, and the label carrier may have a second length which is substantially equal to the first length. In this way, the first and second support member can mainly be positioned in a first and a second corner of the mounting frame and the label carrier may extend over almost the entire length, for example, over almost the entire upper or lower edge of the installation frame. Consequently, the first and second protrusions may preferably be positioned in two corners of the mounting frame, for example in the two upper corners of the mounting frame.

According to embodiments of the invention, the label carrier may have a stepped transition between the first and the second support member and the middle part, such that the first and the second support member extend mainly in a first plane and the middle part extends mainly in a second plane, the second plane being substantially parallel to the first plane. Thus, the first and second support member can extend at the back side of the mounting frame, whilst the middle part extends at the front side of the mounting frame, and whereby the transition of the first support member to the middle part is positioned in the first cut-out and the transition of the second support member to the middle part is positioned in the second cut-out.

The mounting frame may, according to embodiments of the invention, at its back side be provided with a first and a second thickening, and the first and second support members may respectively be provided with a first and a second. The first and second thickening are complementary to the first and second opening, such that, when mounted, the first thickening is positioned in the first opening, and the second thickening is positioned in the second opening. According to other embodiments of the invention, the mounting frame may be provided with a first and second opening and the first and second support member may, at the front side, be provided a first and second complementary thickening, such that, when mounted, the first and second thickening of the support members fit into respectively the first and second opening in the mounting frame. According to a specific embodiment in which the mounting frame is made of metal, the thickenings can be implemented as joggles.

The label carrier may preferably be a long and narrow carrier, and the first and second cut-outs may preferably be positioned near an upper or lower edge of the mounting frame. In this way the electric functions need not be adapted, and the label carriers can simply be added to the existing electric devices where only the mounting frame and the cover frame require slight adaptations. According to embodiments of the invention, the first and second cut-out may be symmetrically positioned between respectively the center of the mounting frame's upper edge and a first upper corner, and between the center of the mounting frame's upper edge and a second upper corner. According to an alternative embodiment, the first and second cut-out may similarly be positioned symmetrically on the mounting frame's lower edge.

Furthermore, a hole can be provided between the first and the second cut-out for receiving a screw for fixing the mounting frame onto the wall. In this case, the middle part of the label carrier may preferably be shaped such that clearance is provided to accommodate the head of such screw. According to embodiments of the invention, the electric device may further comprise a window that can be fixed in the window opening of the cover frame.

According to an alternative embodiment, a window can be fixed onto the middle part of the label carrier. The window may preferably be made of a transparent plastic, for example a transparent polycarbonate. For example, the window can be welded or glued in the window opening of the cover frame or can be clamped onto the middle part of the label carrier.

According to embodiments of the invention, the electric function may be one of a power socket, a switch, a dimmer, a data connection or an RF transmitter.

The shape of the cover frame can be adapted depending on the electric function to be installed. Additionally a central plate or a button can be provided that can be mounted onto the front of the mounting frame, the cover frame thereby extending around the central plate or button.

When fixing the electric function to the flush-mounted box, for example using clamps or screws, the label carrier will be further locked to prevent it from being removed after installation, unless the entire electric device is removed.

A person skilled in the art will understand that the present invention can equally be used for applications with one electric function as well as for applications where multiple electric functions have to be fixed onto or into a wall, whereby one common cover frame is provided for multiple mounting frames. In such latter embodiment, a label carrier will be provided for each mounting frame, and therefore for each of the electric functions, whilst one common cover frame is provided with multiple window openings.

According to embodiments of the invention, the label carrier can be provided with a self-adhesive label. According to alternative embodiments, the label carrier can be directly written upon, for example using laser engraving.

The invention further provides a label carrier for use in an electric device according to embodiments of the invention and with properties as described above.

### Brief description of the drawings

The present invention will hereinafter be described by means of different figures which are not intended to limit the invention in any way. It has to be noted that same reference signs in the different figures refer to same, similar or analogous elements.
Figures 1A and 1B show a perspective view of an electric device according to embodiments of the invention respectively in a partially disassembled state and in a fully disassembled state;
Figures 2A and 2B show a perspective view of part of an electric device according to embodiments of the invention respectively in a fully assembled state and in a fully disassembled state;
Figures 3A and 3B show a perspective view of part of an electric device according to embodiments of the invention respectively in a fully assembled state and in a fully disassembled state;
Figure 4 shows a perspective view of part of an electric device according to embodiments of the invention in a fully disassembled state.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

Not all embodiments of the invention necessarily comprise all features of the invention. In the following description and claims, any of the claimed embodiments can be used in any combination. The present invention provides an electric device for being installed into or onto a wall. The electric device comprises at least one electric function, at least one mounting frame for fixing the electric device onto a wall and being adapted to carry the at least one electric function and a cover frame adapted to be fixed onto the at least one mounting frame, the cover frame being provided with at least one window opening. The electric device furthermore comprises at least one label carrier to be placed between the at least one mounting frame and the cover frame in front of the at least one window opening. According to the invention, each of the at least one label carrier has an elongated middle part with a first and second end, the first end having a first support member and the second end having a second support member. Further according to the invention, each of the at least one mounting frame is provided with a first cut-out providing the first support member to the back of the mounting frame and with a second cut-out for providing the second support member to the back of the mounting frame. The first and second cut-out are such that, when installed, the first and second support member are placed against the back of the mounting frame whilst the middle part is located at the front of the mounting frame.

An electric device according to embodiments of the invention has as an advantage that no additional means are required to fix the label carrier to the mounting frame. More in particular, the label carrier and the mounting frame are adapted in such a way that the label carrier can be installed in a fixed position onto the mounting frame, and stays on the mounting frame even when the cover frame is removed.

The present invention will hereinafter be described by means of different embodiments. It has to be understood that these embodiments are only for the ease of understanding the invention and are not intended to limit the invention in any way.

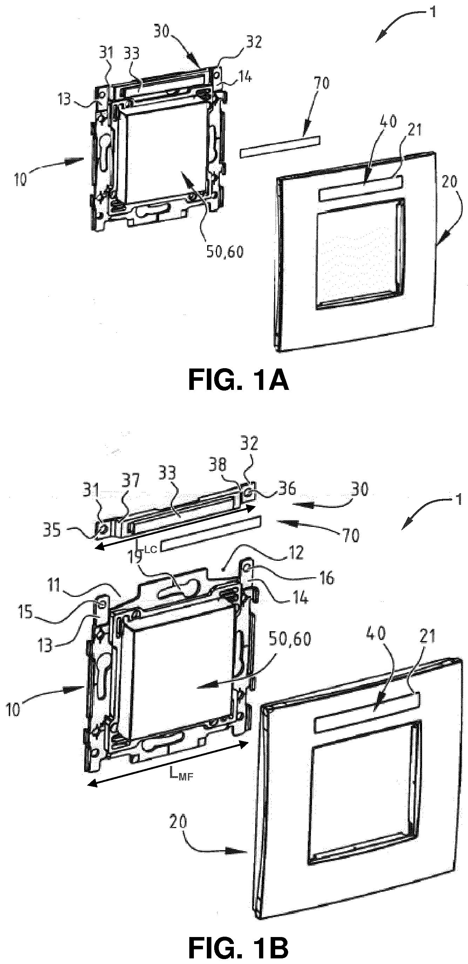

Figures 1A and 1B illustrate a first embodiment of an electric device 1 according to the invention. The electric device 1 comprises at least one electric function 50 (not shown in Figures 1A and 1B but provided at the rear or front of the mounting frame 10, typically behind a central plate 60 or a button 60) into a wall. The electric function 50 may be any electric function known by a person skilled in the art that is suitable for being built in a box in the wall, such as for example but not limited to a power socket, a switch, a dimmer, a data connection or an RF transmitter. The electric device 1 comprises at least one mounting frame 10 for fixing the electric device 1 onto the wall.

The mounting frame 10 is adapted to carry the electric function 50 and is provided with a number of holes 19 for screws, such that the installation frame 10 can be fixed onto the wall, whereby an electric function 50, provided at the rear of the mounting frame 10, is then located inside a cavity or box in the wall. The electric device 1 furthermore comprises a cover frame 20 adapted to be fixed onto the at least one mounting frame 10. The cover frame 20 is provided with at least one window opening 21 for exposing the electric function 10.

Further, according to the invention, the electric device comprises at least one label carrier 30. According to embodiments of the invention, the number of label carriers 30 may be equal to the number of mounting frames 10, but does not necessarily has to be so. According to embodiments, the electric device 1 may comprise more mounting frames 10, and thus more electric functions 60, than it comprises label carriers 30. According to embodiments in which the electric device 1 comprises multiple mounting frames 10 and multiple label carriers 30, a common cover frame 20 may be provided.

Hereinafter, the electric device 1 will be described as having one mounting frame 10 carrying one function 10 and comprising one label carrier 30. However, it has to be understood that this is only for the ease of explaining the invention and is not intended to limit the invention in any way. The electric device 1 may comprise as many mounting frames 10, and thus functions 50, and label carriers 30 as is appropriate for a particular application. For example, the electric device 1 may comprise two, three or more mounting frames 10 and thus functions 50, as required for the application.

The label carrier 30 is adapted to be placed between the at least one mounting frame 10 and the cover frame 20. The label carrier 30 comprises an elongate middle part 33 and is provided at a first end with a first support member 31 and at a second end with a second support member 32. The middle part 33 and the first and second support member 31, 32 may preferably be moulded as a single element.

The mounting frame 10 is provided with a first cut-out 11 for fitting the first support member 31 to the back of the mounting frame 10 and with a second cut-out 12 for fitting the second support member 32 to the back of the mounting frame 10. In this way, the label carrier 30 is fixed to the mounting frame 10, whereby the first and second support members 31, 32 are located at the back of the mounting frame 10 and the elongated middle part 33 is located at the front of the mounting frame 10, as is illustrated in Figure 1A.

The first and second cut-out 11, 12 are preferably located adjacent to the outer periphery of the mounting frame 10, and then again preferably to an upper edge or a lower edge of the mounting frame 10. According to embodiments of the invention, the mounting frame 10 may be provided with a first protrusion 13 and a second protrusion 14 next to respectively the first cut-out 11 and the second cut-out 12. The first and second protrusion 13, 14 extend with respect to a plane of the mounting frame 10, at the front side thereof and the first and second support member 31, 32 are adapted to extend behind the first and second protrusion 13, 14. Preferably, the first and second protrusion 13, 14 extend exactly so far with respect to the plane of the mounting frame that, when the mounting frame 10 is fixed onto a wall, the first support member 31 and the second support member 32 do not protrude to the rear of the mounting frame 10, such that the rear of the mounting frame 10 can be mounted flush onto the wall. When fixing the label carrier 30 to the mounting frame 10, according to these embodiments, the first support member 31 is preferably fitted to the back of the first protrusion 13 and the second support member 32 is preferably fitted to the back of the second protrusion 14.

According to the embodiment illustrated in Figure 1, the label carrier 30 may have a stepped transition between the first support member 31 and the elongated middle part 33 and between the second support member 32 and the elongated middle part 33. Hereby, the first support member 31 and the second support member 32 substantially lie in a same, first plane while the elongated middle part 33 lies in another, second plane, substantially parallel to the plane of the first and second support member 21, 32. The first support member 31 and the second support member 32 may, for example, be moulded as tabs that extend in the first plane. The first support member 31 may be connected via a first transitional part 37 to the elongated middle part 33, and the second support member 32 may be connected via a second transitional part 38 to the elongated middle part 33.

To further improve fixation between the label carrier 30 and the mounting frame 10, first and second thickenings 15, 16 may be provided at the back of respectively the first and second protrusions 13, 14. According to embodiments in which the mounting frame 10 is made out of metal, these thickenings 15, 16 may be shaped as joggles. The first and second protrusions 13, 14 may, according to embodiments of the invention, formed as one piece with the mounting frame 10. The first and second support members 31, 32 may then respectively be provided with first and second openings 35, 36 with a shape complementary to the shape of the first and second thickenings 15, 16. In this way, the label carrier 30 can be securely fixed to the mounting frame 10, such that the mounting frame 10/label carrier 30 assembly can be easily mounted onto a wall without risk that the label carrier 30 is removed from the mounting frame 10. According to further embodiments of the invention, the thickenings and openings may also be provided the other way around, which means that the mounting frame 10 may be provided with a first and second opening and the first and second support member 31, 32 of the label carrier 10 may, at the front, be provided with respectively a first and second complementary thickening, such that, when mounted, the first and second thickening fit into the first and second opening.

The first and second cut-out 11, 12 may preferably be positioned symmetrically with respect to the center of the upper edge of the mounting frame 10. The mounting frame 10 may have a length L_{MF} and the label carrier 30 may have a length L_{LC}. The length L_{MF} of the mounting frame 10 and the length L_{LC} of the label carrier 30 may be substantially equal to each other. The first and second protrusions 13, 14 may be positioned in the left and right top corner of the installation frame 10. A hole 19 can be provided between the first and the second cut-outs 11, 12 to accept a screw for fixing the mounting frame 10 onto the wall. The elongated middle part 33 of the label carrier 30 may be shaped such that sufficient clearance is provided for the head of a screw through the hole 19.

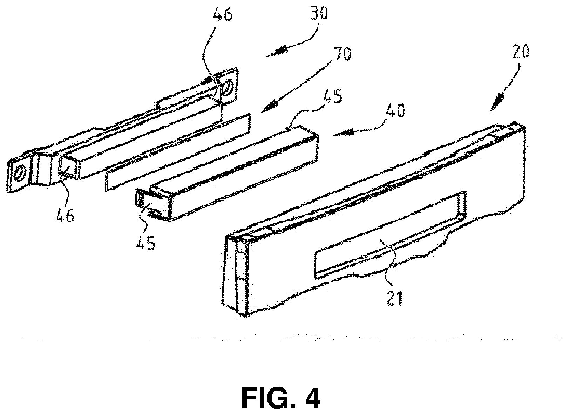

For providing information on the label carrier 30, a label 70, preferable a self-adhesive label, can be provided on the label carrier 30, as is illustrated in Figure 1B. According to alternative embodiments, as for example shown in Figure 4, a window 40 can additionally be provided onto the label carrier 30 covering the label 70. The window 40 can be provided onto the label carrier 30 by, for example, using clamping tabs 45 that can be inserted in opening 46 provided at a side of the label carrier 30. The window 40 may preferably be made of a transparent plastic, for example a transparent polycarbonate. For example, the window 40 can be welded or glued in the window opening 21 of the cover frame 20 or can be clamped onto the elongated middle part 33 of the label carrier 30. According to still further embodiments of the invention, information can be provided on the label carrier 30 by, for example, by directly writing on the label carrier 30, for example using laser engraving.

The electric function 50 may be any electric function known by a person skilled in the art and suitable for being built into a cavity or box in a wall. For example, the electric function 50 may be an electric outlet, a switch, a dimmer, an RF transmitter, a data connection or the like.

In Figures 1A and 1B the central plate 60 is shown in a simplified form, but a person skilled in the art knows that this central plate 60 is adapted to the electric function 50 that is behind it.

For example, when the electric function 50 is an electric outlet, the central plate 60 may be provided with a cut-out with openings to accept an electric plug.

The mounting frame may typically be made of metal, but can, according to embodiments of the invention, also be made of a plastic or any other suitable material, or can be a PCB.

According to embodiments of the invention and as already mentioned above, the electric function 50 can be such that, when it is mounted onto the mounting frame 10, a cavity or box is to be provided into the wall for housing the electric function 50. According to other embodiments of the invention, the electric function 50 can be small and flat, for example a knob controlled RF transmitter, such that it can be mounted onto the mounting frame 10 without the need to provide a cavity or box in the wall.

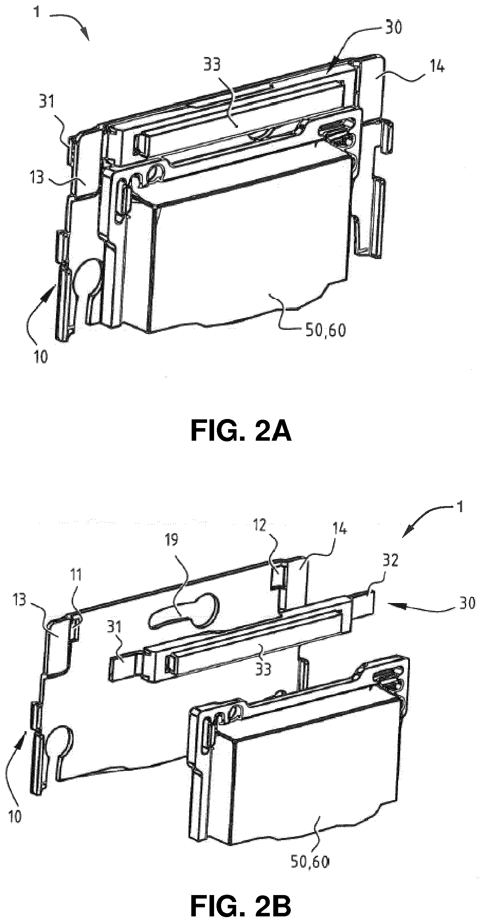

Figures 2A and 2B show a second embodiment of an electric device 1 according to the invention. For the purpose of clarity, only the difference with the electric device 1 of the first embodiment will be explained. It has to be understood that the other parts that are not described here anymore are the similar as for the electric device 1 described in the first embodiment. According to the second embodiment, the first and second cut-out 11, 12 do not extend to the upper edge of the mounting frame 10. According to this embodiment, the label carrier 30 needs to be sufficiently flexible to be bent somewhat in order to insert the first and second support members 31, 32 into respectively the first and second cut-out 11, 12.

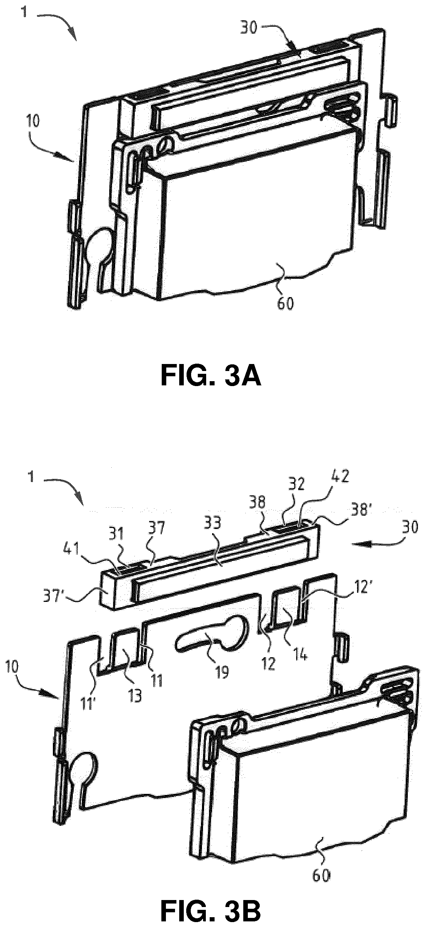

Figures 3A and 3B show a third embodiment of the electric device 1 according to the invention. Again, only the difference with the electric device 1 of the first and second embodiment will be explained. It has to be understood that the other parts that are not described here anymore are the similar as for the electric device 1 described in the first embodiment and/or the second embodiment. According to the third embodiment, the elongated middle part 33 of the label carrier 30 may extend across the first support member 31 and the second support member 32.

Additionally, two transitional parts 37, 37' are provided between the first support member 31 and the elongated middle part 33, and two transitional parts 38, 38' are provided between the second support member 32 and the elongated middle part 33. Additionally, two cut-outs 11, 11' are provided to accommodate the first transitional parts 37, 37' when mounting the label carrier 30 onto the mounting frame 10. Similarly, two cut-outs 12, 12' are provided to accommodate the second transitional parts 38, 38' when mounting the label carrier 30 onto the mounting frame 10.

According to this embodiment, the label carrier 30 may comprise a first slot 41 adjacent to the first support member 31 and a second slot 42 adjacent to the second support member 32. The first protrusion 13 of the mounting frame 10 fits into the first slot 41 and the second protrusion 14 of the mounting frame fits into the second slot 42. This is another way to implement a secure mounting of the label carrier 30 onto the mounting frame 10, whereby the label carrier 30 is formed as a single piece and no additional parts are required to mount the label carrier 30 onto the mounting frame 10.

A person skilled in the art will understand that the invention is not limited to the sample embodiments described above and that many variants and modifications are conceivable within the scope of the invention, solely limited to the following claims.

## Claims

1. An electric device (1) for being installed into or onto a wall, the electric device (1) comprising:
- at least one electric function (50),
- at least one mounting frame (10) for fixing the electric device (1) onto a wall and adapted to carry the at least one electric function (50);
- a cover frame (20) adapted to be fixed onto the at least one mounting frame (10); the cover frame (20) being provided with at least one window opening (21);
- at least one label carrier (30) to be placed between the at least one mounting frame (10) and the cover frame (20) in front of the at least one window opening (21);
wherein each of the at least one label carrier (30) has an elongated middle part (33) with a first and second end, the first end having a first support member (31) and the second end having a second support member (32); and that each of the at least one mounting frame (10) is provided with a first cut-out (11) for providing the first support member (31) to the back of the mounting frame (10) and with a second cut-out (12) for providing the second support member (32) to the back of the mounting frame (10), the first and second cut-outs (11, 12) being such that, when installed, the first and second support members (31, 32) are placed against the back of the mounting frame (10) whilst the middle part (33) is located at the front of the mounting frame (10); **characterized in that** the mounting frame (10) is provided with a first protrusion (13) and a second protrusion (14) next to respectively the first cut-out (11) and the second cut-out (12), the first and second protrusion (13, 14) extending with respect to a plane of the mounting frame (10), at the front side thereof, and whereby the first and second support member (31, 32) are adapted to extend behind the first and second protrusion (13, 14).

2. An electric device (1) according to claim 1, wherein the first and second cut-outs (11, 12) are adjacent to the outer periphery of the mounting frame (10).

3. An electric device (1) according to claim 1 or 2, wherein the first and second protrusion (13, 14) extend so far from the plane of the mounting frame (10) that the first and second support member (31, 32) do not extend from the back side of the mounting frame (10).

4. An electric device (1) according to any of the previous claims, wherein the back of the mounting frame (10) is provided with a first and a second thickening (15, 16), and that the first and the second support member (31, 32) are provided with a first and a second complementary opening (35, 36) such that, when mounted, the first and second thickening (15, 16) fit into the first and second opening (35, 36).

5. An electric device (1) according to any of claims 1 to 3, wherein the mounting frame (10) is provided with a first and a second opening, and that the first and the second support member (31 32) are at the front provided with respectively a first and a second complementary thickening, such that, when mounted, the first and second thickening fit into the first and second opening.

6. An electric device (1) according to any of the previous claims, wherein the label carrier (30) has a stepped transition between the first and the second support member (31, 32) and the middle part (33), such that the first and the second support member (31, 32) extend mainly in a first plane and the middle part (33) extends mainly in a second plane which is substantially parallel to the first plane.

7. An electric device (1) according to any of the previous claims, wherein the mounting frame (10) has a length (L_{MF}) and the label carrier (30) has a length (L_{LC}) which is substantially equal to the length (L_{MF}) of the mounting frame (10), such that the first and the second support member (31, 32) are mainly located in a first and a second corner of the mounting frame (10).

8. An electric device (1) according to any of the previous claims, wherein the first and second cut-out (11, 12) are provided symmetrically with respect to the centre of an upper edge or lower edge of the mounting frame (10).

9. An electric device (1) according to claim 8, wherein a hole is provided between the first and the second cut-out (11, 12) for receiving a screw for fixing the mounting frame (10) onto the wall.

10. An electric device (1) according to any of the previous claims, wherein the electric device furthermore comprises a window (40) that can be fixed in the window opening (21) of the cover frame (20).

11. An electric device (1) according to any of claims 1 to 9, wherein the electric device furthermore comprises a window (40) that can be fixed onto the label carrier (30).

12. An electric device (1) according to any of the previous claims, wherein the electric device furthermore comprises a central plate (60) or a button that can be fixed onto the front of the mounting frame (10), whereby the cover frame (20) extends around the central plate (60) or button.

13. An electric device (1) according to any of the previous claims, wherein the electric function (50) comprises one of a power socket, a switch, a dimmer, a data connection or an RF transmitter.

## Patentansprüche

1. Elektrische Vorrichtung (1) zum Einbau in oder an einer Wand, wobei die elektrische Vorrichtung (1) umfasst:
- mindestens eine elektrische Funktion (50);
- mindestens einen Montagerahmen (10) zum Befestigen der elektrischen Vorrichtung (1) an einer Wand und angepasst um der mindestens einen elektrischen Funktion (50) zu tragen;
- einen Abdeckrahmen (20), der der angepasst ist, um an dem mindestens einen Montagerahmen befestigt zu werden; wobei der Abdeckrahmen (20) mit mindesten einer Fensteröffnung (21) versehen ist;
- mindestens einen Etikettenträger (30), der zwischen dem mindestens einen Montagerahmen (10) und dem Abdeckrahmen (20) vor der mindestens einen Fensteröffnung (21) anzuordnen ist;
wobei jeder von dem mindestens einen Etikettenträger (30) ein langgestrecktes Mittelteil (33) mit einem ersten und einem zweiten Ende aufweist, wobei das erste Ende ein erstes Stützelement (31) und das zweite Ende ein zweites Stützelement aufweist (32); und
wobei jeder von dem mindestens einen Montagerahmen (10) mit einem ersten Ausschnitt (11) zum Bereitstellen des ersten Stützelements (31) an der Rückseite des Montagerahmens (10) und mit einem zweiten Ausschnitt (12) zum Bereitstellen des zweiten Stützelements (32) an der Rückseite des Montagerahmens (10) versehen ist, wobei der erste und der zweite Ausschnitt (11, 12) so beschaffen sind, dass wenn installiert, das erste und das zweite Stützelement (31, 32) an der Rückseite des Montagerahmens (10) angeordnet sind, während sich das Mittelteil (33) an der Vorderseite des Montagerahmens (10) befindet;
**dadurch gekennzeichnet, dass** der Montagerahmen (10) mit einem ersten Vorsprung (13) und einem zweiten Vorsprung (14) neben dem ersten Ausschnitt (11) bzw. dem zweiten Ausschnitt (12) versehen ist, wobei sich der erste und der zweite Vorsprung (13, 14) in Bezug auf eine Ebene des Montagerahmens (10) an der Vorderseite davon erstrecken und wobei das erste und das zweite Stützelement (31, 32) ausgebildet sind, um sich hinter dem ersten und dem zweiten Vorsprung (13, 14) zu erstrecken.

2. Elektrische Vorrichtung (1) nach Anspruch 1, wobei der erste und der zweite Ausschnitt (11, 12) zu dem Außenumfang des Montagerahmens (10) benachbart sind.

3. Elektrische Vorrichtung (1) nach Anspruch 1 oder 2, wobei der erste und der zweite Vorsprung (13, 14) sich so weit von der Ebene des Montagerahmens (10) erstrecken, dass das erste und das zweite Stützelement (31, 32) sich nicht über die Rückseite des Montagerahmens (10) hinaus erstrecken.

4. Elektrische Vorrichtung (1) nach einem der vorstehenden Ansprüche, wobei die Rückseite des Montagerahmens (10) mit einer ersten und einer zweiten Verdickung (15, 16) versehen ist und wobei das erste und das zweite Stützelement (31, 32) mit einer ersten und einer zweiten komplementären Öffnung (35, 36) versehen sind, sodass, wenn montiert, die erste und zweite Verdickung (15, 16) in die erste und zweite Öffnung (35, 36) passen.

5. Elektrische Vorrichtung (1) nach einem der Ansprüche 1 bis 3, wobei der Montagerahmen (10) mit einer ersten und einer zweiten Öffnung versehen ist und wobei das erste und das zweite Stützelement (31, 32) an der Vorderseite mit einer ersten bzw. einer zweiten komplementären Verdickung versehen sind, sodass, wenn montiert, die erste und zweite Verdickung in die erste und zweite Öffnung passen.

6. Elektrische Vorrichtung (1) nach einem der vorstehenden Ansprüche, wobei der Etikettenträger (30) einen gestuften Übergang zwischen dem ersten und dem zweiten Stützelement (31, 32) und dem Mittelteil (33) aufweist, sodass das erste und das zweite Stützelement (31, 32) sich hauptsächlich in einer ersten Ebene erstrecken und das Mittelteil (33) sich hauptsächlich in einer zweiten Ebene erstreckt, die im wesentlichen parallel zu der ersten Ebene ist.

7. Elektrische Vorrichtung (1) nach einem der vorstehenden Ansprüche, wobei der Montagerahmen (10) eine Länge (L_{MF}) aufweist und der Etikettenträger (30) eine Länge (L_{LC}) aufweist, die im wesentlichen gleich der Länge (L_{MF}) des Montagerahmens (10) ist, sodass sich das erste und das zweite Stützelement (31, 32) hauptsächlich in einer ersten und einer zweiten Ecke des Montagerahmens (10) befinden.

8. Elektrische Vorrichtung (1) nach einem der vorstehenden Ansprüche, wobei der erste und der zweite Ausschnitt (11, 12) symmetrisch in Bezug auf die Mitte einer oberen Kante oder unteren Kante des Montagerahmens (10) vorgesehen sind.

9. Elektrische Vorrichtung (1) nach Anspruch 8, wobei wischen dem ersten und dem zweiten Ausschnitt (11, 12) ein Loch zum Aufnehmen einer Schraube zum Befestigen des Montagerahmens (10) an der Wand vorgesehen ist.

10. Elektrische Vorrichtung (1) nach einem der vorstehenden Ansprüche, wobei die elektrische Vorrichtung weiter ein Fenster (40) umfasst, das in der Fensteröffnung (21) des Abdeckrahmens (20) befestigt werden kann.

11. Elektrische Vorrichtung (1) nach einem der Ansprüche 1 bis 9, wobei die elektrische Vorrichtung weiter ein Fenster (40) umfasst, das an dem Etikettenträger (30) befestigt werden kann.

12. Elektrische Vorrichtung (1) nach einem der vorstehenden Ansprüche, wobei die elektrische Vorrichtung weiter eine zentrale Platte (60) oder einen an der Vorderseite des Montagerahmens (10) befestigbaren Knopf aufweist, wobei der Abdeckrahmen (20) sich um die zentrale Platte (60) oder den Knopf herum erstreckt.

13. Elektrische Vorrichtung (1) nach einem der vorstehenden Ansprüche, wobei die elektrische Funktion (50) eines von einer Steckdose, einem Schalter, einem Dimmer, einer Datenverbindung oder einem HF-Sender umfasst.

## Revendications

1. Dispositif électrique (1) destiné à être installé dans ou sur un mur, le dispositif électrique (1) comprenant :
- au moins une fonction électrique (50),
- au moins un cadre de montage (10) pour fixer le dispositif électrique (1) sur un mur et adapté pour porter l'au moins une fonction électrique (50);
- un cadre de couverture (20) adapté pour être fixé sur l'au moins un cadre de montage (10); le cadre de couverture (20) étant pourvu d'au moins une ouverture de fenêtre (21);
- au moins un porte-étiquette (30) pour être placé entre l'au moins un cadre de montage (10) et le cadre de couverture (20) devant l'au moins une ouverture de fenêtre (21) ;
dans lequel chacun de l'au moins un porte-étiquette (30) a une partie médiane allongée (33) avec une première et une seconde extrémité, la première extrémité ayant un premier élément de support (31) et la seconde extrémité ayant un second élément de support (32) ; et
dans chacun de l'au moins un cadre de montage (10) est pourvu d'une première découpe (11) pour placer le premier élément de support (31) à l'arrière du cadre de montage (10) et d'une seconde découpe (12) pour placer le second élément de support (32) à l'arrière du cadre de montage (10), les première et seconde découpes (11, 12) étant telles qu'une fois installés, les premier et second éléments de support (31, 32) sont placés contre l'arrière du cadre de montage (10) tandis que la partie médiane (33) est située à l'avant du cadre de montage (10) ;
**caractérisé en ce que** le cadre de montage (10) est pourvu d'une première saillie (13) et d'une seconde saillie (14) respectivement à côté de la première découpe (11) et de la seconde découpe (12), les première et seconde saillies (13, 14) s'étendant par rapport à un plan du cadre de montage (10), sur son côté avant, et dans lequel les premier et second éléments de support (31, 32) sont adaptés pour s'étendre à l'arrière des première et seconde saillies (13, 14).

2. Dispositif électrique (1) selon la revendication 1, dans lequel les première et seconde découpes (11, 12) sont adjacentes à la périphérie externe du cadre de montage (10).

3. Dispositif électrique (1) selon la revendication 1 ou 2, dans lequel les première et seconde saillies (13, 14) s'étendent si loin du plan du cadre de montage (10) que les premier et second éléments de support (31, 32) ne s'étendent pas depuis la face arrière du cadre de montage (10).

4. Dispositif électrique (1) selon l'une quelconque des revendications précédentes, dans lequel l'arrière du cadre de montage (10) est pourvu d'un premier et d'un second épaississement (15, 16), et les premier et second éléments de support (31, 32) sont pourvus d'une première et d'une seconde ouverture complémentaire (35, 36) de telle sorte qu'une fois montés, les premier et second épaississements (15, 16) s'emboîtent dans les première et seconde ouvertures (35, 36).

5. Dispositif électrique (1) selon l'une quelconque des revendications 1 à 3, dans lequel le cadre de montage (10) est pourvu d'une première et d'une seconde ouverture, et le premier et le second élément de support (31, 32) sont à l'avant pourvus respectivement d'un premier et d'un second épaississement complémentaire, de telle sorte qu'une fois montés, les premier et second épaississements s'emboîtent dans les première et seconde ouvertures.

6. Dispositif électrique (1) selon l'une quelconque des revendications précédentes, dans lequel le porte-étiquette (30) présente une transition étagée entre le premier et le second élément de support (31, 32) et la partie médiane (33), de telle sorte que le premier et le second élément de support (31, 32) s'étendent principalement dans un premier plan et la partie médiane (33) s'étend principalement dans un second plan qui est sensiblement parallèle au premier plan.

7. Dispositif électrique (1) selon l'une quelconque des revendications précédentes, dans lequel le cadre de montage (10) a une longueur (L_{MF}) et le porte-étiquette (30) a une longueur (L_{LC}) qui est sensiblement égale à la longueur (L_{MF}) du cadre de montage (10), de telle sorte que le premier et le second élément de support (31, 32) sont situés principalement dans un premier et un second angles du cadre de montage (10).

8. Dispositif électrique (1) selon l'une quelconque des revendications précédentes, dans lequel les première et seconde découpes (11, 12) sont placées symétriquement par rapport au centre d'un bord supérieur ou bord inférieur du cadre de montage (10).

9. Dispositif électrique (1) selon la revendication 8, dans lequel un trou est prévu entre la première et la seconde découpe (11, 12) pour recevoir une vis pour fixer le cadre de montage (10) sur le mur.

10. Dispositif électrique (1) selon l'une quelconque des revendications précédentes, dans lequel le dispositif électrique comprend en outre une fenêtre (40) qui peut être fixée dans l'ouverture de fenêtre (21) du cadre de couverture (20).

11. Dispositif électrique (1) selon l'une quelconque des revendications 1 à 9, dans lequel le dispositif électrique comprend en outre une fenêtre (40) qui peut être fixée sur le porte-étiquette (30).

12. Dispositif électrique (1) selon l'une quelconque des revendications précédentes, dans lequel le dispositif électrique comprend en outre une plaque centrale (60) ou un bouton qui peut être fixé(e) sur l'avant du cadre de montage (10), moyennant quoi le cadre de couverture (20) s'étend autour de la plaque centrale (60) ou du bouton.

13. Dispositif électrique (1) selon l'une quelconque des revendications précédentes, dans lequel la fonction électrique (50) comprend l'un d'une prise de courant, d'un commutateur, d'un gradateur, d'une liaison de données ou d'un émetteur RF.
